# EUROPÄISCHE PATENTSCHRIFT

(11) **EP 3 684 602 B1**
(45) Veröffentlichungstag und Bekanntmachung des Hinweises auf die Patenterteilung: **10.08.2022**
(21) Anmeldenummer: 18759948.5
(22) Anmeldetag: 27.08.2018
(51) Int. Cl.: B29C 33/00, B29C 45/14, B29C 39/10, B29L 31/30

(54) **VERFAHREN ZUR HERSTELLUNG EINES ZIERTEILS FÜR FAHRZEUGE UNTER NUTZUNG EINER VERLORENEN DICHTUNG**
METHOD FOR PRODUCING A TRIM PART FOR VEHICLES, USING A TEMPORARY SEAL
PROCÉDÉ DE FABRICATION D'UN ÉLÉMENT DÉCORATIF POUR VÉHICULES FAISANT APPEL À UN JOINT PERDU

(30) Priorität: 18.09.2017 DE 102017121558
(43) Veröffentlichungstag der Anmeldung: 29.07.2020
(73) Patentinhaber: HIB Trim Part Solutions GmbH, 76646 Bruchsal (DE)
(72) Erfinder: KELLER, Bernd, 75045 Walzbachtal-Jöhlingen (DE)
(74) Vertreter: Staeger & Sperling Partnerschaftsgesellschaft mbB
(86) Internationale Anmeldenummer: PCT/EP2018/073045
(87) Internationale Veröffentlichungsnummer: WO 2019/052799

(56) Entgegenhaltungen:
- DE-A1- 19 824 463
- DE-A1- 19 824 463
- DE-A1-102004 059 066
- DE-A1-102004 059 066
- US-A1- 2005 227 043

## Beschreibung

Die Erfindung betrifft ein Verfahren zur Herstellung eines Zierteils für Fahrzeuge unter Verwendung eines Spritzgusswerkzeugs.

Bei der Herstellung von Zierteilen, insbesondere Zierteilen für das Armaturenbrett oder die Verkleidung von Fahrzeugen im Innenraum, werden Dekorlagen wie Holzfurnieren auf ein Trägerelement aufgebracht und mit einer Lackschicht bzw. Polyurethanschicht überzogen. Die Abdichtung der Polyurethanschicht erfolgt im Werkzeug durch ein Vorprägen auf dem Trägerelement beziehungsweise ein Überfahren des Trägerelements. Dabei bleibt jedoch stets ein Rand des Trägerelements sichtbar, da keine seitliche Überdeckung des Randabschnitts des Trägerelements gewährleistet wird. Das bedeutet, dass eine Seitenansicht den Schichtaufbau aus Trägerelement, Dekorschicht und Polyurethanschicht als Sandwichaufbau wiedergibt. Dies kann in manchen Ausführungen als Stilmittel gewünscht sein, bevorzugt wird jedoch meist, dass das der Schichtaufbau in der Seitenansicht nicht sichtbar ist.

Druckschriftlicher Stand der Technik im vorliegenden technischen Gebiet ist offenbart in den Dokumenten DE 10 2004 059 066 A1 und DE 198 24 463 A1.

Aufgabe der Erfindung ist es deshalb, ein Verfahren bereit zu stellen, mit dem ein Zierteil herstellbar ist, dessen Randabschnitt ausgebildet ist, dass der Schichtaufbau nicht zu erkennen ist.

Diese Aufgabe wird durch die Merkmalskombination gemäß Patentanspruch 1 gelöst.

Erfindungsgemäß wird ein Verfahren zur Herstellung eines Zierteils für Fahrzeuge unter Verwendung eines Spritzgusswerkzeugs mit den folgenden Schritten und Merkmalen vorgeschlagen:
a. Erzeugen eines Trägersubstrats in einer Werkzeugkavität des Spritzgusswerkzeugs aus einem ersten Kunststoffmaterial.
b. Anspritzen einer verlorenen Dichtung aus einem zweiten Kunststoffmaterial entlang eines zu einer Kante des Trägersubstrats beabstandeten Kantenabschnitts des Trägersubstrats, so dass die Kante des Trägersubstrats freiliegt, wobei das zweite Kunststoffmaterial zu dem ersten Kunststoffmaterial unterschiedlich und ausgebildet ist, mit dem ersten Kunststoffmaterial eine wieder lösbare Bindung einzugehen,
c. Erzeugung einer Dichtkavität zwischen dem Trägersubstrat und einem Werkzeugteil des Spritzgusswerkzeugs,
d. Einbringen einer Oberflächendeckschicht in die Dichtkavität auf das Trägersubstrat und dessen Kante übergreifend;
e. Öffnen des Spritzgusswerkzeugs und Entformen des Zierteils. Entfernen der verlorenen Dichtung von dem Trägersubstrat.

Das Trägersubstrat ist ein formgebendes Trägerelement, das zur Befestigung des Zierteils am Fahrzeug und zur Aufnahme bzw. Ausbildung des sichtbaren Dekors, beispielsweise Holzfurniere, Aluminium, Karbongewebe, etc. und der Oberflächendeckschicht dient.

Erfindungsgemäß wird innerhalb des Spritzgusswerkzeugs an das zu fertigende Bauteil eine verlorene Dichtung mit angespritzt. Die Bezeichnung "verlorene Dichtung" drückt aus, dass diese nur zeitweise verwendet und noch während des erfindungsgemäßen Verfahrens wieder entfernt wird. Für jedes zu fertigende Bauteil wird eine eigene verlorene Dichtung an das jeweilige Trägersubstrat angespritzt.

Die Verwendung unterschiedlicher Kunststoffmaterialien für das Trägersubstrat und die verlorene Dichtung erfolgt ausdrücklich in der Weise, dass die beiden Materialien gerade keine dauerhafte Verbindung eingehen. Hierfür wird in einer vorteilhaften Ausführungsvariante vorgesehen, dass das erste Kunststoffmaterial des Trägersubstrats aus einem Kunststoffgemisch aus Polycarbonate und Acrylnitril Butadien Styrol (PC/ABS), Acrylnitril Butadien Styrol und Polyamid (ABS/PA) oder Polycarbonat (PC) und das zweite Kunststoffmaterial der verlorenen Dichtung aus einem olefinischen Thermoplast mit einem Wachsanteil, insbesondere Polyethylen (PE) oder Polypropylen (PP) gebildet ist.

Die während des Verfahrens erzeugte Dichtkavität zwischen dem Trägersubstrat und dem Werkzeugteil des Spritzgusswerkzeugs wird entlang dem Kantenabschnitt des Trägersubstarts von der verlorenen Dichtung begrenzt, wobei der gewünschte Abstand zur Kante eingehalten wird. Die Dichtkavität ist an die Kante des Trägersubstrats zweiseitig übergreifend gebildet. Der Abstand bestimmt die Länge, wie weit sich die Oberflächendeckschicht von der sichtbaren Oberfläche über die Kante gewinkelt hinaus erstreckt und die Kante überdeckt. Dabei wird der Abstand bzw. die Länge derart festgelegt, dass der Schichtaufbau des zu fertigenden Zierteils in der Seitenansicht nicht mehr erkennbar ist. Beim Erzeugen der Dichtkavität werden das Werkzeugteil und die verlorene Dichtung dichtend in Eingriff gebracht. Hierzu fährt das Werkzeugteil gegen die Dichtung.

In einer Ausführung des Verfahrens wird zwischen dem Trägersubstrat und der Oberflächendeckschicht eine Dekorschicht, beispielsweise Folien, Papier, (Holz-)Furniere, Aluminium, Karbongewebe, etc. eingebracht. Die Dekorschicht erstreckt sich in einer Ausführung ausschließlich auf einer sichtbaren Oberseite des Trägersubstrats, in einer alternativen Ausführung wird die Dekorschicht um die Kante des Trägersubstrats in Richtung der verlorenen Dichtung herum geführt. Die Oberflächendeckschicht kann glasklar oder gefärbt ausgebildet werden.

In einer Weiterbildung des Verfahrens ist vorgesehen, dass das erste Kunststoffmaterial für das Trägersubstrat zur Erhöhung der Steifigkeit und Festigkeit einen Glasfaseranteil von bis zu 30% aufweist.

Ferner ist das Verfahren in einer vorteilhaften Ausführung dadurch gekennzeichnet, dass die Oberflächendeckschicht im Reaction Injection Moulding-Verfahren (RIM) auf das Trägersubstrat aufgebracht wird.

Das Entformen wird in einer Ausführungsvariante als zweistufiger Entformungsprozess ausgeführt, bei dem zunächst das Zierteil entformt und anschließend die verlorene Dichtung von dem Trägersubstrat mit entfernt wird. Alternativ kann die Dichtung auch nach dem Prozessende manuell oder automatisiert entfernt werden.

Eine Weiterbildung des Verfahrens sieht zudem vor, dass in die verlorene Dichtung eine zumindest der Dichtkavität zuweisende Funktionsfläche integriert ist, die als Trennfläche zwischen dem Zierteil und dem Spritzgusswerkzeug dient. Eine derartige Funktionsfläche kann beispielsweise als Überstand bzw. überschüssiges Material entlang der verlorenen Dichtung dem Werkzeugteil zuweisend ausgebildet sein, das durch Anpressen des Werkzeugteils plastisch verformt wird, um eine verbesserte Abdichtung herzustellen. Das überschüssige Material kann zudem speziell geformt werden, beispielsweise mit einem dreieckigen Querschnitt, dessen Spitze auf das Werkzeugteil zuweist. Ein entsprechender Überstand weist vorzugsweise eine Größe von ca. 0,5mm auf. Durch die Integration der Funktionsfläche in die verlorene Dichtung kann auf zusätzliche Maßnahmen zur Sicherstellung der Abdichtung, beispielsweise am Werkzeugteil, verzichtet werden.

Die Erfindung umfasst ferner jedes Zierteil, das nach einem der vorstehend beschriebenen Verfahren hergestellt wurde.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: einen ersten Verfahrensschritt des Spritzgusswerkzeugs,
- Fig. 2: einen zweiten Verfahrensschritt des Spritzgusswerkzeugs,
- Fig. 3: einen dritten Verfahrensschritt des Spritzgusswerkzeugs,
- Fig. 4: einen vierten Verfahrensschritt des Spritzgusswerkzeugs,
- Fig. 5: einen fünften Verfahrensschritt des Spritzgusswerkzeugs,
- Fig. 6: ein entformtes Zierteil mit noch verbundener Dichtung;
- Fig. 7: ein entformtes fertiges Zierteil.

Die Figuren sind beispielhaft schematisch. Gleiche Bezugszeichen benennen gleiche Teile in allen Ansichten.

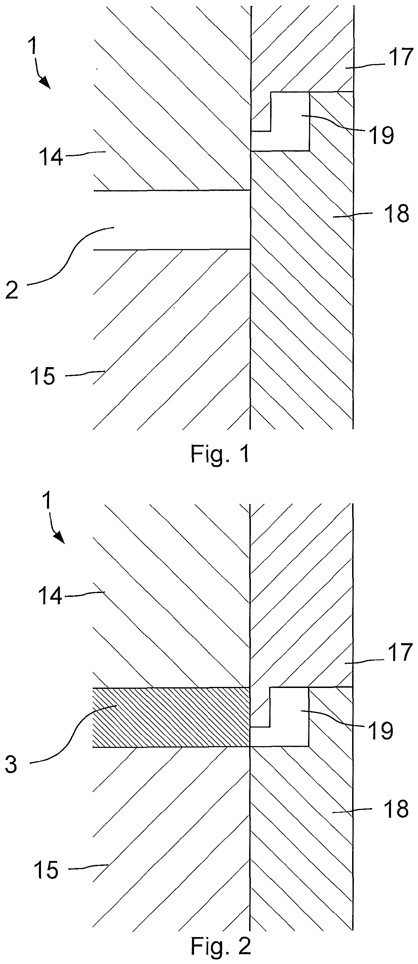

Die Figuren 1 - 5 zeigen ein Ausführungsbeispiel des Verfahrens zur Herstellung eines Zierteils 10 unter Verwendung des Spritzgusswerkzeugs 1, wobei das Spritzgusswerkzeug 1 mehrere Werkzeugteile 14, 15, 17, 18 aufweist, die zueinander beweglich sind. Über die Werkzeugteile 14, 15 wird eine Werkzeugkavität 2 gebildet, in die das Trägersubstrat 3 eingespritzt wird, wie es die Figuren 1 und 2 zeigen. Das Trägersubstrat 3 ist aus dem ersten Kunststoffmaterial, insbesondere aus einem Kunststoffgemisch aus Polycarbonate und Acrylnitril Butadien Styrol (PC/ABS), Acrylnitril Butadien Styrol und Polyamid (ABS/PA) oder Polycarbonat (PC) gebildet.

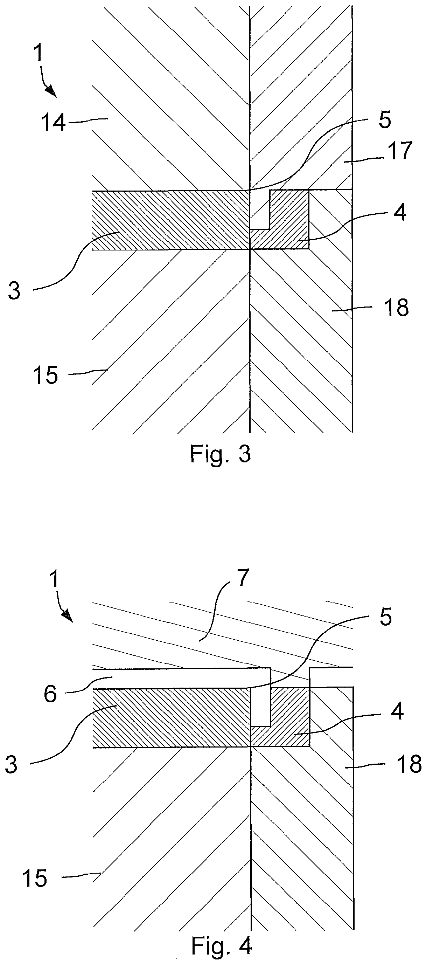

Von einer zweiten Seite werden die eine Werkzeugkavität 19 bildenden Werkzeugteile 17, 18 auf Höhe des Trägersubstrats 3 verfahren und anschließend die verlorene Dichtung 4 aus einem zweiten Kunststoffmaterial, insbesondere einem olefinischen Thermoplast, insbesondere Polyethylen (PE) oder Polypropylen (PP), an das Trägersubstrat 3 angespritzt. Die beiden Kunststoffmaterialien des Trägersubstrats 3 und der verlorenen Dichtung 4 gehen eine zeitweise, jedoch lösbare Verbindung ein, so dass die verlorenen Dichtung 4 als Funktionskörper im Fertigungsverfahren genutzt werden kann. Die verlorenen Dichtung 4 wird entlang des zu der Kante 5 des Trägersubstrats 3 beabstandeten Kantenabschnitts angespritzt, so dass die Kante 5 des Trägersubstrats 3 an anschließenden Kantenabschnitten zweiseitig (Oberfläche und Seitenfläche) freiliegt, wie es Fig. 3 zeigt. Hierbei sind die Werkzeugteile 14, 15, 17, 18 geschlossen. Auch wenn es in der gezeigten Schnittansicht nicht zu erkennen ist, erstreckt sich die Dichtung 4 entlang einer gesamten Länge des Trägersubstrats 3.

Anschließend werden die Werkzeugteile 14, 17 geöffnet und weg gefahren.

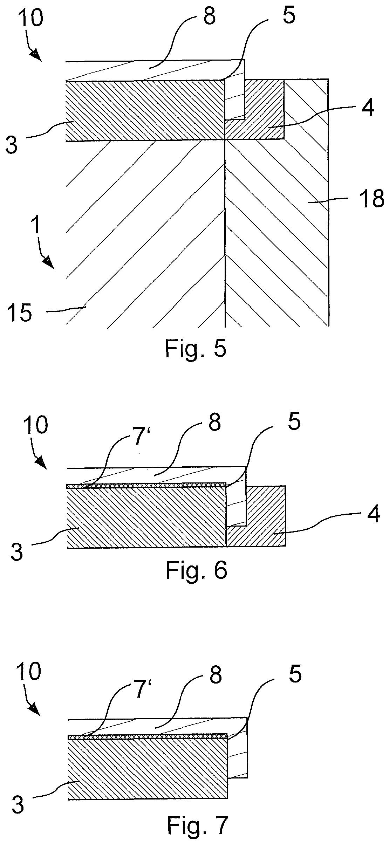

Alternativ wird das Trägersubstrat 3 mit der angespritzten Dichtung 4 gedreht, so dass gemäß Fig. 4 das Werkzeugteil 7 zur dichtenden Auflage auf die verlorene Dichtung 4 gebracht und die Dichtkavität 6 zwischen dem Trägersubstrat 3, dem Werkzeugteil 7 des Spritzgusswerkzeugs 1 und der Dichtung 4 erzeugt wird, wie in Fig. 4 gezeigt. In die Dichtkavität 6 wird die Oberflächendeckschicht 8 auf das Trägersubstrat 3 und dessen Kante 5 übergreifend im Reaction Injection Moulding-Verfahren (RIM) aufgebracht und ausgehärtet. Anschließend wird das Spritzgusswerkzeug 1 geöffnet das Zierteil 10 entformt, wie es Fig. 5 zeigt. Dabei kann die verlorene Dichtung 4 von dem Trägersubstrat 3 gleich mit entfernt werden.

Fig. 6 zeigt eine alternative Ausführung des Verfahrens, bei der die Dichtung 4 nach dem Entformen des Zierteils 10 noch an dem Trägersubstrat 3 befestigt ist und anschließend außerhalb des Spritzgusswerkzeugs 1 entfernt wird. Ferner ist bei dieser Ausführung zusätzlich auf dem Trägersubstrat 3 eine sich bis zur Kante 5 erstreckende Dekorschicht 7' aufgebracht, bevor die Oberflächendeckschicht 8 die Kante 5 umgreifend im RIM-Prozess aufgebracht wird. Dies ist entsprechend in das Verfahren gemäß der Figuren 1-5 integrierbar, wobei die Dekorschicht 7' auf das gespritzte Trägersubstrat 3 aufgelegt wird. Die Oberflächendeckschicht 8 kann glasklar ausgebildet sein, so dass die Dekorschicht 7' erkennbar bleibt.

Fig. 7 zeigt das fertige Zierteil 10 mit dem Trägersubstrat 3 aus dem ersten Kunststoffmaterial, der Dekorschicht 7' und der die Kante 5 umgreifenden Oberflächendeckschicht 8.

## Patentansprüche

1. Verfahren zur Herstellung eines Zierteils (10) für Fahrzeuge unter Verwendung eines Spritzgusswerkzeugs (1) umfassend die Schritte
a. Erzeugen eines Trägersubstrats (3) in einer Werkzeugkavität (2) des Spritzgusswerkzeugs (1) aus einem ersten Kunststoffmaterial;
b. Anspritzen einer verlorenen Dichtung (4) aus einem zweiten Kunststoffmaterial entlang eines zu einer Kante (5) des Trägersubstrats (3) beabstandeten Kantenabschnitts des Trägersubstrats (3), so dass die Kante (5) des Trägersubstrats (3) freiliegt, wobei das zweite Kunststoffmaterial zu dem ersten Kunststoffmaterial unterschiedlich und ausgebildet ist, mit dem ersten Kunststoffmaterial eine wieder lösbare Bindung einzugehen,
c. Erzeugung einer Dichtkavität (6) zwischen dem Trägersubstrat (3) und einem Werkzeugteil (7) des Spritzgusswerkzeugs (1),
d. Einbringen einer Oberflächendeckschicht (8) in die Dichtkavität (6) auf das Trägersubstrat (3) und dessen Kante (5) übergreifend;
e. Öffnen des Spritzgusswerkzeugs (1) und Entformen des Zierteils (10), wobei die verlorene Dichtung (4) von dem Trägersubstrat (3) entfernt wird.

2. Verfahren nach Anspruch 1, **dadurch gekennzeichnet, dass** beim Erzeugen der Dichtkavität (6) das Werkzeugteil und die verlorene Dichtung (4) dichtend in Eingriff gebracht werden und die Dichtkavität zumindest abschnittsweise begrenzen.

3. Verfahren nach Anspruch 1 oder 2, **dadurch gekennzeichnet, dass** zwischen dem Trägersubstrat (3) und der Oberflächendeckschicht (8) eine Dekorschicht (7') eingebracht wird.

4. Verfahren nach einem der vorigen Ansprüche, **dadurch gekennzeichnet, dass** das erste Kunststoffmaterial des Trägersubstrats (3) aus einem Kunststoffgemisch aus Polycarbonate und Acrylnitril Butadien Styrol (PC/ABS), Acrylnitril Butadien Styrol und Polyamid (ABS/PA) oder Polycarbonat (PC) gebildet ist.

5. Verfahren nach einem der vorigen Ansprüche, **dadurch gekennzeichnet, dass** das zweite Kunststoffmaterial der verlorenen Dichtung (4) aus einem olefinischen Thermoplast, insbesondere Polyethylen (PE) oder Polypropylen (PP) gebildet ist.

6. Verfahren nach einem der vorigen Ansprüche, **dadurch gekennzeichnet, dass** das erste Kunststoffmaterial einen Glasfaseranteil von bis zu 30% aufweist.

7. Verfahren nach einem der vorigen Ansprüche, **dadurch gekennzeichnet, dass** die Dichtkavität (6) die Kante des Trägersubstrats (3) zweiseitig übergreifend gebildet wird.

8. Verfahren nach einem der vorigen Ansprüche, **dadurch gekennzeichnet, dass** die Oberflächendeckschicht (8) im Reaction Injection Moulding-Verfahren (RIM) auf das Trägersubstrat (3) aufgebracht wird.

9. Verfahren nach einem der vorigen Ansprüche, **dadurch gekennzeichnet, dass** das Entformen als zweistufiger Entformungsprozess ausgeführt wird, bei dem zunächst das Zierteil (10) entformt und anschließend die verlorene Dichtung (4) von dem Trägersubstrat (3) entfernt wird.

10. Verfahren nach einem der vorigen Ansprüche, **dadurch gekennzeichnet, dass** in die verlorene Dichtung (4) eine zumindest der Dichtkavität (6) zuweisende Funktionsfläche integriert ist, die als Trennfläche zwischen dem Zierteil (10) und dem Spritzgusswerkzeug dient.

11. Verfahren nach dem vorigen Anspruch, **dadurch gekennzeichnet, dass** die verlorene Dichtung (4) zur Erzeugung der Funktionsfläche einen vorstehenden und durch das Werkzeugteil plastisch verformbaren Materialüberstand aufweist.

12. Verfahren nach einem der vorigen Ansprüche, **dadurch gekennzeichnet, dass** für jedes Zierteil eine neue verlorene Dichtung (4) gespritzt wird.

## Claims

1. A method for producing a trim part (10) for vehicles using an injection mold (1) comprising the steps:
a. Creating a carrier substrate (3) in a tool cavity (2) of the injection mold (1) from a first plastic material;
b. Injection molding a lost seal (4) from a second plastic material along an edge section of the carrier substrate (3) positioned at a distance to an edge (5) of the carrier substrate (3), such that the edge (5) of the carrier substrate (3) is exposed, wherein the second plastic material is different from the first plastic material and is designed to form a detachable bond with the first plastic material;
c. Generating a sealing cavity (6) between the carrier substrate (3) and a tool component (7) of the injection mold (1);
d. Inserting a surface cover layer (8) into the sealing cavity (6) on the carrier substrate (3), said cover layer reaching behind the edge (5) of said substrate;
e. Opening the injection mold (1) and removing the trim part (10), wherein the lost seal (4) is removed from the carrier substrate (3).

2. The method according to Claim 1, **characterized in that** the tool component and the lost seal (4) are brought into sealing contact while the sealing cavity (6) is generated, and that they confine the sealing cavity at least in sections.

3. The method according to Claim 1 or 2, **characterized in that** a decorative layer (7') is inserted between the carrier substrate (3) and the surface cover layer (8).

4. The method according to any one of the preceding claims, **characterized in that** the first plastic material of the carrier substrate (3) is formed from a plastic mixture of polycarbonates and acrylonitrile butadiene styrene (PC/ABS), acrylonitrile butadiene styrene and polyamide (ABS/PA) or polycarbonate (PC).

5. The method according to any one of the preceding claims, **characterized in that** the second plastic material of the lost seal (4) is formed from an olefinic thermoplastic, in particular polyethylene (PE) or polypropylene (PP).

6. The method according to any one of the preceding claims, **characterized in that** the first plastic material has a fiber glass content of up to 30%.

7. The method according to any one of the preceding claims, **characterized in that** the sealing cavity (6) is formed in such a manner that it reaches around the edge of the carrier substrate (3) on two sides.

8. The method according to any one of the preceding claims, **characterized in that** the surface cover layer (8) is applied to the carrier substrate (3) using the Reaction Injection Molding (RIM) method.

9. The method according to any one of the preceding claims, **characterized in that** the removing from the mold is performed as a two-stage removal process, in which the trim part (10) first is removed from the mold and then the lost seal (4) is removed from the carrier substrate (3).

10. The method according to any one of the preceding claims, **characterized in that** a functional surface at least oriented toward the sealing cavity (6) is integrated into the lost seal (4), which functional surface serves as a separating surface between the trim part (10) and the injection mold.

11. The method according to the preceding claim, **characterized in that** the lost seal (4) has a protrusion of material that is plastically deformable by the tool component for generating the functional surface.

12. The method according to any one of the preceding claims, **characterized in that** a new lost seal (4) is molded for each trim part.

## Revendications

1. Procédé de fabrication d'une pièce de garniture (10) pour véhicules à l'aide d'un moule à injection (1) comprenant les étapes de :
a. création d'un substrat porteur (3) dans une cavité d'outil (2) du moule à injection (1) à partir d'une première matière plastique ;
b. moulage par injection d'un joint perdu (4) à partir d'une seconde matière plastique le long d'une section de bord du substrat porteur (3) positionnée à distance d'un bord (5) du substrat porteur (3), de sorte que le bord (5) du substrat porteur (3) soit exposé, dans lequel la seconde matière plastique est différente de la première matière plastique et est conçue pour former une liaison détachable avec la première matière plastique ;
c. génération d'une cavité d'étanchéité (6) entre le substrat porteur (3) et un composant d'outil (7) du moule à injection (1) ;
d. insertion d'une couche de couverture de surface (8) dans la cavité d'étanchéité (6) sur le substrat porteur (3), ladite couche de couverture s'étendant derrière le bord (5) dudit substrat ;
e. ouverture du moule à injection (1) et retrait de la pièce de garniture (10), dans lequel le joint perdu (4) est retiré du substrat porteur (3).

2. Procédé selon la revendication 1, **caractérisé en ce que** le composant d'outil et le joint perdu (4) sont amenés en contact étanche lorsque la cavité d'étanchéité (6) est générée et **en ce qu'**ils confinent la cavité d'étanchéité au moins par endroits.

3. Procédé selon la revendication 1 ou 2, **caractérisé en ce qu'**une couche décorative (7') est insérée entre le substrat porteur (3) et la couche de couverture de surface (8).

4. Procédé selon une quelconque revendication précédente, **caractérisé en ce que** la première matière plastique du substrat porteur (3) est formée d'un mélange plastique de polycarbonates et d'acrylonitrile butadiène styrène (PC/ABS), d'acrylonitrile butadiène styrène et de polyamide (ABS/PA) ou de polycarbonate (PC).

5. Procédé selon une quelconque revendication précédente, **caractérisé en ce que** la seconde matière plastique du joint perdu (4) est formée d'un thermoplastique oléfinique, en particulier le polyéthylène (PE) ou le polypropylène (PP).

6. Procédé selon une quelconque revendication précédente, **caractérisé en ce que** la première matière plastique a une teneur en fibre de verre allant jusqu'à 30 %.

7. Procédé selon une quelconque revendication précédente, **caractérisé en ce que** la cavité d'étanchéité (6) est formée de sorte qu'elle entoure le bord du substrat porteur (3) sur deux côtés.

8. Procédé selon une quelconque revendication précédente, **caractérisé en ce que** la couche de couverture de surface (8) est appliquée sur le substrat porteur (3) selon le procédé de Moulage par Injection à Réaction (RIM).

9. Procédé selon une quelconque revendication précédente, **caractérisé en ce que** le démoulage est effectué selon un processus de démoulage en deux étapes, dans lequel la pièce de garniture (10) est d'abord retirée du moule, puis le joint perdu (4) est retiré du substrat porteur (3).

10. Procédé selon une quelconque revendication précédente, **caractérisé en ce qu'**une surface fonctionnelle au moins orientée vers la cavité d'étanchéité (6) est intégrée dans le joint perdu (4), laquelle surface fonctionnelle sert de surface de séparation entre la pièce de garniture (10) et le moule à injection.

11. Procédé selon la revendication précédente, **caractérisé en ce que** le joint perdu (4) a une protubérance en matière plastiquement déformable par le composant d'outil pour la génération de la surface fonctionnelle.

12. Procédé selon une quelconque revendication précédente, **caractérisé en ce qu'**un nouveau joint perdu (4) est moulé pour chaque pièce de garniture.
